Europäisches Patentamt

(19) European Patent Office

Office européen des brevets

(11) EP 0 715 555 B1

(12) EUROPÄISCHE PATENTSCHRIFT

(45) Veröffentlichungstag und Bekanntmachung des Hinweises auf die Patenterteilung:
17.06.1998  Patentblatt 1998/25

(21) Anmeldenummer: 94923663.2

(22) Anmeldetag: 19.08.1994

(51) Int. Cl.⁶: $B23K\ 11/25$

(86) Internationale Anmeldenummer:
PCT/DE94/00952

(87) Internationale Veröffentlichungsnummer:
WO 95/05917 (02.03.1995  Gazette 1995/10)

(54) **VERFAHREN ZUR ERMITTLUNG EINES BEWERTUNGSZEITINTERVALLES SOWIE VERFAHREN ZUR QUALITÄTSBEURTEILUNG EINER PUNKTSCHWEISSVERBINDUNG AUF GRUNDLAGE EINES TEMPERATURVERLAUFES IN DEM BEWERTUNGSZEITINTERVALL**

METHOD OF DETERMINING AN EVALUATION TIME INTERVAL AND METHOD OF ASSESSING THE QUALITY OF A SPOT WELD BASED ON THE VARIATION IN TEMPERATURE DURING THE TIME INTERVAL

PROCEDE PERMETTANT DE DETERMINER UN INTERVALLE DE TEMPS D'EVALUATION ET PROCEDE PERMETTANT D'EVALUER LA QUALITE D'UNE SOUDURE PAR POINTS SUR LA BASE DES VARIATIONS DE TEMPERATURE PENDANT L'INTERVALLE DE TEMPS D'EVALUATION

(84) Benannte Vertragsstaaten:
DE ES FR GB IT NL SE

(30) Priorität: 24.08.1993 DE 4328363

(43) Veröffentlichungstag der Anmeldung:
12.06.1996  Patentblatt 1996/24

(73) Patentinhaber:
SIEMENS AKTIENGESELLSCHAFT
80333 München (DE)

(72) Erfinder:
• FORTMANN, Manfred
  D-53804 Much (DE)
• KÜNNEMANN, Volkhard
  D-51766 Engelskirchen (DE)

(56) Entgegenhaltungen:
WO-A-92/10326          WO-A-93/04812
DE-A- 3 711 771

## Beschreibung

Verfahren zur Ermittlung eines Bewertungszeitintervalles sowie Verfahren zur Qualitätsbeurteilung einer Punktschweißverbindung auf Grundlage eines Temperaturverlaufes in dem Bewertungszeitintervall

Die Erfindung betrifft ein Verfahren zur Ermittlung eines Bewertungszeitintervalles für eine Qualitätsbeurteilung einer Punktschweißverbindung auf Grundlage eines Temperaturverlaufes an der Punktschweißverbindung sowie ein Verfahren zur Qualitätsbeurteilung einer Punktschweißverbindung auf Grundlage eines Temperaturverlaufes an der Punktschweißverbindung in einem Bewertungszeitintervall.

Die WO 92/10326 A1 behandelt in ihrer Gesamtheit ein Verfahren und eine Vorrichtung zur Überprüfung der Qualität von Punktschweißverbindungen. Die Punktschweißverbindungen werden an zwei miteinander zu verschweißenden Teilen aus mindestens einem ersten Metall mit einer Elektrode aus einem zweiten Metall ausgeführt. Fur eine Beurteilung der Qualität der Punktschweißverbindungen wird ein Verlauf der Temperatur an der Punktschweißverbindung als Grundlage genommen, wobei die Qualität umso schlechter anzunehmen ist, je schneller die Kurve der Temperaturwerte abfällt und von einer Geraden abweicht. Aus dem Verlauf der Temperatur ist somit unmittelbar nach Herstellung zerstörungsfrei feststellbar, wie gut die Punktschweißverbindung ist. Der Temperaturabfall wird über eine zwischen den Teilen und der Elektrode induzierten thermoelektrischen Spannung ermittelt.

Als Bewertungsmaßstab der Qualität kann der folgende Ausdruck

$$T_0 \cdot \frac{(t_1 - t_0)}{(T_0 - T_1)}$$

dienen. Darin ist $T_0$ die zu einem ersten Zeitpunkt $t_0$ nach der Schweißung bestimmte Temperatur und $T_1$ die zu einem zweiten Zeitpunkt $t_1$ bestimmte Temperatur. Ein günstiger Wert für die Differenz zwischen den beiden Zeitpunkten beträgt typischer Weise etwa 25 ms. Auf das Problem, wie ein günstiger Wert für die Differenz der beiden Zeitpunkte experimentell zu ermitteln ist und vor allem wie ein günstiger Wert für den ersten oder den zweiten Zeitpunkt experimentell zu ermitteln ist, wird in der WO 92/10326 in keiner Weise eingegangen. Eine in der WO 92/10326 A1 beschriebene Vorrichtung zur Beurteilung der Qualität einer Punktschweißverbindung weist mindestens ein zwischen zwei miteinander zu verschweißenden Teilen und einer Schweißelektrode schaltbares Spannungsmeßgerät, einen Trigger, der bei Beendigung eines Schweißvorgangs ein Signal aussendet, sowie einen Zeitgeber zur Angabe des Beginns und des Endes mindestens einer definierten Zeitspanne nach dem Aussenden des Signals der Beendigung des Schweißvorgangs auf. Auf Grundlage der in dieser Zeitspanne ermittelten Werte der Temperatur wird die Beurteilung der Qualität durchgeführt.

Aufgabe der Erfindung ist es, ein Verfahren und eine Vorrichtung zur Ermittlung eines Bewertungszeitintervalles für eine Qualitätsbeurteilung einer Punktschweißverbindung auf der Grundlage eines Temperaturverlaufes an der Punktschweißverbindung anzugeben, so daß mit den innerhalb des ermittelten Bewertungszeitintervalles liegenden Temperaturwerten oder mit den Werten einer der Temperatur zugeordneten Größe eine sichere Beurteilung der Qualität unterschiedlicher Punktschweißverbindungen gewährleistet ist. Diese Beurteilung der Qualität soll sich insbesondere für eine automatisierte Durchführung eignen. Eine weitere Aufgabe besteht darin, ein Verfahren und eine Vorrichtung zur Qualitätsbeurteilung einer Punktschweißverbindung auf Grundlage eines Temperaturverlaufes an der Punktschweißverbindung in einem Bewertungszeitintervall anzugeben.

Erfindungsgemäß erfolgt die Lösung der erstgenannten Aufgabe dadurch, daß

a) für eine Mehrzahl von Referenzpunktschweißverbindungen der jeweilige Verlauf einer der Temperatur eindeutig zugeordneten Größe bestimmt wird, wobei die Referenzpunktschweißverbindungen eine jeweils verschiedene Qualität haben und jedem Verlauf der Größe die Qualität der zugehörigen Referenzpunktschweißverbindung zugeordnet ist, und

b) als Bewertungszeitintervall ein Zeitintervall bestimmt wird, in dem die Verläufe der Größe deutlich voneinander verschieden sind, die Größe für jeden Verlauf einen unterschiedlichen Mittelwert hat und die Mittelwerte eine monotone Funktion der zugeordneten Qualitäten sind.

Der Verlauf mit dem niedrigsten Mittelwert hat dabei die niedrigste Qualität und der Verlauf mit dem höchsten Mittelwert die höchste Qualität oder umgekehrt. Mit steigendem Wert des Mittelwertes nimmt die Qualität somit monoton zu oder monoton ab. Innerhalb des Bewertungszeitintervalles ist daher aufgrund der Verläufe der Größe, insbesondere aufgrund des Mittelwertes, eine einfache und sichere Zuordnung einer Qualität für jede Punktschweißverbindung möglich. Liegt der Mittelwert eines Verlaufs der Größe einer Punktschweißverbindung zwischen den Verläufen der Größe zweier Referenzpunktschweißverbindungen (Referenzverläufe), so liegt auch die Qualität der Punktschweißverbindung zwischen den Qualitäten der Referenzpunktschweißverbindungen.

Eine deutliche Verschiedenheit zweier Verläufe der Größe liegt vor, wenn im wesentlichen über das gesamte Bewertungszeitintervall Werte des einen Verlaufes deutlich über den Werten des anderen Verlaufes liegen. An einzelnen Stellen innerhalb des Bewertungszeitintervalles können die Werte der beiden Verläufe übereinstimmen oder ihre Reihenfolge um einen geringfügigen Betrag umkehren. Jedenfalls muß der eine Verlauf im Mittel deutlich über dem anderen Verlauf verbleiben.

Vorteilhaft ist es, jeweils eine Referenzpunktschweißverbindung mit einer guten, einer befriedigenden und einer ungenügenden Qualität zu verwenden. Dadurch ist eine Einordnung weiterer Punktschweißverbindungen innerhalb der durch die Referenzpunktschweißverbindungen gegebenen Reihenfolge einfach und sicher möglich.

Für eine Bestimmung des Beginns des Bewertungszeitintervalles eignet sich ein Zeitpunkt besonders, ab dem die Verläufe der Größe merklich auseinanderlaufen. Dadurch ist gewährleistet, daß zumindest in einer Umgebung dieses Zeitpunktes bei größeren Zeiten die Verläufe deutlich voneinander verschieden sind.

Vorteilhafterweise wird das Ende des Bewertungszeitintervalles durch einen Zeitpunkt bestimmt, an dem die Verläufe der Größe merklich zusammenlaufen, da bei noch größeren Zeiten die Verläufe der Größe nicht mehr deutlich voneinander verschieden sind. Eine Bestimmung des Bewertungszeitintervall zwischen einem Zeitpunkt ab dem die Verläufe auseinanderlaufen und einem Zeitpunkt ab dem die Verläufe beginnen zusammenzulaufen ist durch automatische Vergleichseinheiten, beispielsweise durch Computer-Prozessoren realisiert, einfach und genau durchführbar.

Besonders günstig ist ein Bewertungszeitintervall, das maximal 100 ms, insbesondere etwa 60 ms, beträgt. Dadurch wird der Verlauf der Größe in einem großen Zeitintervall für die Qualitätsbeurteilung bereitgestellt. Zudem wird eine Güte der Qualitätsbeurteilung deutlich verbessert, da der Einfluß von Meßfehlern verringert wird.

Vorteilhaft ist es, wenn das Bewertungszeitintervall zumindest den Beginn des Erstarrens eines Schmelzbades umfaßt, welches bei einer Punktschweißverbindung mit guter Qualität erzeugt wird. Durch Eintritt des Erstarrens eines Schmelzbades wird Erstarrungswärme freigesetzt, wodurch ein Abfall der Temperatur verlangsamt wird. Gegenüber einem Abfall der Temperatur an einer Punktschweißverbindung mit ungenügender Qualität, bei der allenfalls eine geringe Erstarrungswärme frei wird, ist somit der Abfall der Temperatur bei der guten Punktschweißverbindung deutlich verlangsamt. Die Verläufe der Größe unterschiedlicher Punktschweißverbindungen beginnen mit Eintritt des Erstarrens merklich auseinander zu laufen.

Besonders vorteilhaft ist eine Verwendung der Thermospannung zwischen zwei miteinander verschweißten Teilen aus zumindest einem ersten Metall und einer Elektrode aus einem zweiten Metall als die der Temperatur zugeordnete Größe. Die Thermospannung ist einfach zu bestimmen und ist bei Punktschweißverbindungen innerhalb des Bewertungszeitintervalls deutlich abhängig von der jeweiligen Qualität. Eine Erfassung des Einsetzens des Erstarrens eines Schmelzbades ist mit der Thermospannung ebenfalls möglich, da ähnlich dem Verlauf der Temperatur bei Freiwerden der Erstarrungswärme ein Abfall der Thermospannung verlangsamt wird.

Weiterhin vorteilhaft ist es, die Größe aus einer zeitlichen Ableitung der Thermospannung oder aus einem Quotienten aus der Thermospannung und der zeitlichen Ableitung zu bilden. Dadurch wird ebenfalls der Einfluß des Erstarrens eines Schmelzbades erfaßt, welcher ein signifikantes Merkmal für die Qualität einer Punktschweißverbindung ist. Ein zeitlicher Verlauf des Quotienten bewirkt eine deutliche Kenntlichmachung des Zeitbereiches, in dem Erstarrungswärme frei wird, wodurch eine deutliche Verschiedenheit der Verläufe erreicht wird, welche Punktschweißverbindungen mit unterschiedlicher Qualität, d.h. unterschiedlicher Erstarrungswärme, zugeordnet sind.

Erfindungsgemäß wird die zweitgenannte Aufgabe dadurch gelöst, daß zur Qualitätsbeurteilung einer Punktschweißverbindung auf Grundlage eines Temperaturverlaufes an der Punktschweißverbindung Werte der Temperatur oder einer der Temperatur zugeordneten Größe in einem Bewertungszeitintervall herangezogen werden, wobei das Bewertungszeitintervall so bestimmt wird, daß die zeitlichen Verläufe einer der Temperatur zugeordneten Größe einer Mehrzahl von Punktschweißverbindungen unterschiedlicher Qualität deutlich voneinander verschieden sind, die Größe für jeden Verlauf einen unterschiedlichen Mittelwert hat und die Mittelwerte eine monotone Funktion der Qualitäten sind. Mit einer durch den Mittelwert gegebenen Reihenfolge der Verläufe ist eine signifikante Zuordnung der Qualität einer Punktschweißverbindung möglich. Insbesondere ein Quotient aus Thermospannung und erster zeitlicher Ableitung der Thermospannung eignet sich als Bewertungszahl für die Qualität der Punktschweißung. Die Bewertungszahl kann dabei als Mittelwert des Quotienten über das gesamte Bewertungszeitintervall berechnet werden.

Von besonderem Vorteil ist eine quasikontinuierliche Bestimmung der Größe für jeden Zeitpunkt innerhalb des Bewertungszeitintervalles. Quasikontinuierlich bedeutet in diesem Zusammenhang, daß innerhalb des Bewertungszeitintervalles zu einer Vielzahl von Zeitpunkten die Größe bestimmt, insbesondere gemessen wird, wobei die Zeitpunkte im Vergleich zum gesamten Bewertungsintervall derart dicht aufeinanderfolgen, daß eine praktisch exakte Beschreibung der Größe über das gesamte Bewertungszeitintervall erhalten wird. Typischerweise beträgt der zeitliche Abstand zwischen zwei Zeitpunkten an denen die Größe bestimmt wird etwa 0,3 ms bis 8 ms, insbesondere 2 ms. Das Bewertungszeitintervall hat typischerweise eine Breite von etwa 60 ms. Innerhalb des Bewertungszeitintervalles wird somit an etwa 30 Zeitpunkten die Größe bestimmt und durch geeignete Zuordnungen, insbesondere unter Zuhilfenahme von einfachen Interpolationen ist zu jedem Zeitpunkt die Größe genau bestimmbar. Der zeitliche Verlauf der Größe innerhalb des Bewertungszeitintervalles ist somit einfach und genau gegeben.

Besonders vorteilhaft ist es, den Mittelwert der Größe in dem Bewertungszeitintervall zu bestimmen und als Bewertungsmaßzahl für die Qualität der Punktschweißverbindung zu verwenden. Der Mittelwert kann aus sämtlichen Werten der Größe oder aus einigen signifikanten Werten der Größe bestimmt werden. Mit der Mittelwertbildung kann ein eventuell vorhandener Einfluß aufgrund von Ungenauigkeiten in der Bestimmung der Größe deutlich verringert werden. Die Bewertungsmaßzahl liefert somit eine einfache und sichere Anzeige für die Qualität der Punktschweißverbindung.

Zur Lösung der erstgenannten Aufgabe weist eine Vorrichtung zur Ermittlung des Bewertungszeitintervalls eine Speichereinheit, eine Vergleichseinheit und eine Ausgabeeinheit auf. In der Speichereinheit sind die zeitlichen Verläufe einer der Temperatur eindeutig zuordenbaren Größe einer Mehrzahl von Referenzpunktschweißverbindungen speicherbar, wobei jedem Verlauf die Qualität der zugehörigen Referenzpunktschweißverbindung zugeordnet ist. In der Vergleichseinheit erfolgt eine automatische Ermittlung des Bewertungszeitintervalles durch Vergleich der Mehrzahl von Verläufen. Dabei wird der Bewertungszeitintervall bestimmt als ein Zeitintervall, in dem die Verläufe deutlich voneinander verschieden sind sowie jeweils einen unterschiedlichen Mittelwert aufweisen und zwischen den Mittelwerten und den Qualitäten eine monoton funktionale Beziehung besteht. Die Ausgabeeinheit dient der Ausgabe des ermittelten Bewertungszeitintervalls. Die Mehrzahl der Verläufe kann der Speichereinheit beispielsweise über eine separate Meßvorrichtung auf einmal zugeführt werden. Die Speichereinheit kann ebenfalls direkt mit einer Punktschweißmaschine verbunden sein und unmittelbar eine zwischen den Schweißelektroden der Punktschweißmaschine auftretende Thermospannung erfassen und ggf. daraus die Verläufe der Temperatur zugeordneten Größe bestimmen. Die Verläufe der Größe werden in der Speichereinheit in diesem Fall jeweils im direkten Anschluß an eine Punktschweißung gespeichert. Die den Verläufen zugeordnete Qualität der zugehörigen Referenzpunktschweißverbindungen kann der Speichereinheit separat zugeführt werden oder wird unmittelbar in der Speichereinheit ermittelt. Die Verläufe sowie die zugeordneten Qualitäten werden von der Speichereinheit der Vergleichseinheit zugeführt. Die Vergleichseinheit weist vorzugsweise einen Mittelwertbildner auf, in dem für verschiedene Zeitintervalle ein jeweiliger Mittelwert der Verläufe bestimmt wird. Die Vergleichseinheit hat vorzugsweise einen Vergleicher, in dem die Werte unterschiedlicher Verläufe verglichen werden und in dem ein Zeitpunkt bestimmbar ist, an dem die Verläufe erstmals deutlich voneinander verschieden sind. Ausgehend von diesem Zeitpunkt kann automatisch durch den Vergleicher ermittelt werden, ob die Verläufe weiter auseinanderlaufen und ab wann die Verläufe wieder zusammenlaufen. Ein zweiter Zeitpunkt, der einen Endzeitpunkt des Bewertungszeitintervalles darstellt, kann durch Unterschreiten einer vorgegebenen Annäherung der Verläufe untereinander bestimmt werden. Das durch die Vergleichseinheit bestimmte Bewertungszeitvalls wird an die Ausgabeeinheit geleitet. Mit der Ausgabeeinheit kann beispielsweise eine graphische Ausgabe oder eine datenmäßige Ausgabe des Bewertungszeitintervalles erfolgen. Vorzugsweise erfolgt mit der Ausgabeeinheit eine direkte Übermittlung des Bewertungszeitintervalles an eine Vorrichtung zur Qualitätsbeurteilung von Punktschweißverbindungen.

Anhand der Zeichnung wird das Verfahren zur Ermittlung eines Bewertungszeitintervalles sowie das Verfahren zur Qualitätsbeurteilung einer Punktschweißverbindung erläutert. Es zeigen:

FIG 1     eine zur Durchführung des Verfahrens und zur Messung einer Thermospannung bestimmten Vorrichtung,

FIG 2     einen Verlauf der Temperatur für unterschiedliche Punktschweißverbindungen,

FIG 3     einen Verlauf der Thermospannung für unterschiedliche Punktschweißverbindungen,

FIG 4     einen Verlauf einer aus der Thermospannung und der ersten zeitlichen Ableitung der Thermospannung gebildeten Größe und

FIG 5     einen Verlauf der ersten zeitlichen Ableitung der Thermospannung.

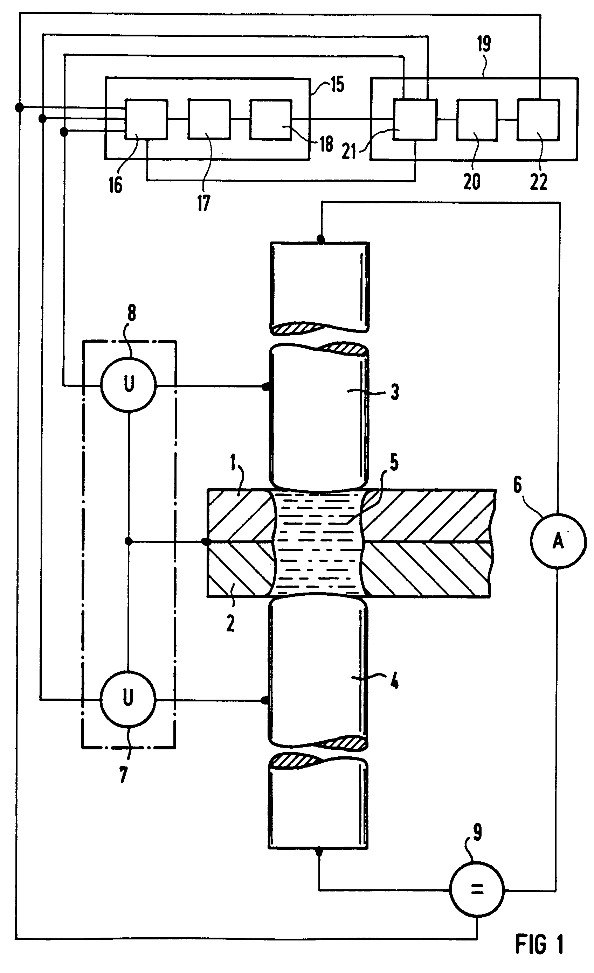

In FIG 1 sind schematisch nur die für die Erläuterung des Verfahrens wesentlichen Teile der Vorrichtung dargestellt.

Die FIG 1 zeigt eine Vorrichtung zur Durchführung des Verfahrens sowie zur Herstellung einer Punktschweißverbindung und zur Messung einer Thermospannung zwischen einer Elektrode 3,4 und zwei Teilen 1,2 aus metallischem Blech. Die Teile 1,2 werden aneinandergepreßt, und mit den Elektroden 3,4 wird über eine Stromquelle 9 ein Schweißstrom durch die Teile 1,2 hindurchgeführt. Der Schweißstrom führt zu einer Erhitzung und schließlich zu einem Schmelzen an einer Punktschweißverbindung 5, wodurch die Teile 1,2 miteinander verschweißt werden. Der Schweißstrom wird über ein Strommeßgerät 6 gemessen. Mit zwei Spannungsmeßgeräten 7,8 sind dem Schweißstrom zugeordnete Spannungen bestimmbar. Nach Durchführung der Schweißung wird mit den Spannungsmeßgeräten 7,8 jeweils eine Thermospannung zwischen einer Elektrode 3,4 und einem Teil 1,2, welches mit der zugeordneten Elektrode 3,4 in Kontakt steht, gemessen.

Die Stromquelle 9 sowie die Spannungsmeßgeräte 7,8 sind mit einer Vorrichtung 15 zur Ermittlung eines Bewertungszeitintervalles sowie mit einer Vorrichtung 19 zur Beurteilung der Qualität der Punktschweißverbindung 5 auf Grundlage der Temperatur oder einer der Temperatur zugeordneten Größe an der Punktschweißverbindung verbunden. Die Vorrichtung 15 zur Ermittlung des Bewertungszeitintervalles hat eine Speichereinheit 16, eine Vergleichseinheit 17 und eine Ausgabeeinheit 18. Die Speichereinheit 16 ist sowohl mit der Stromquelle 9, den Spannungsmeßgeräten 7,8 und der Vorrichtung 19 zur Qualitätsbeurteilung verbunden. In der Speichereinheit 16 werden die Verläufe der Thermospannung oder einer aus der Thermospannung abgeleiteten Größe sowie die Qualität der jedem Verlauf zugehörigen Punktschweißverbindung gespeichert. Die Qualität kann dabei von der Vorrichtung 19 an die Speichereinheit 16 übertragen oder unmittelbar in der Speichereinheit 16 selbst berechnet werden. Die gespeicherten Verläufe sowie die zugehörigen Qualitäten werden der Vergleichseinheit 17 zugeführt. In der Vergleichseinheit 17 wird das Bewertungszeitintervall bestimmt. Das Ergebnis der Bestimmung wird an die Ausgabeeinheit 18 zur Ausgabe weitergeleitet. Von dort gelangt es an die Vorrichtung 19. Zur Erzeugung von Referenzpunktschweißverbindungen unterschiedlicher Qualität werden Punktschweißungen mit unterschiedlich langem bzw. unterschiedlich hohem Schweißstrom hergestellt. Eine Einstellung der Dauer bzw. der Höhe des Schweißstroms erfolgt anhand der in der Vorrichtung 19 ermittelten Qualität der Referenzpunktschweißverbindungen. Beispielsweise können durch eine geeignete Erhöhung des Schweißstroms sukzessive Referenzpunktschweißverbindung mit jeweils gegenüber vorherigen Referenzpunktschweißverbindungen verbesserter Qualität hergestellt werden. Die Vorrichtungen 15,19 können beispielsweise einzeln oder zusammen in einem Mikroprozessor oder einer Rechenanlage mit entsprechenden Signaleingängen, einer Speicher- und einer Prozessoreinheit realisiert sein.

In der Vorrichtung 19 erfolgt eine Beurteilung der Qualität mit der Bewertungseinheit 20 auf Grundlage des Verlaufes der Temperatur oder einer der Temperatur zugeordneten Größe, beispielsweise der Thermospannung, in dem Bewertungszeitintervall. Der Verlauf der Größe wird der Bewertungseinheit 20 über eine Signaleingabeeinheit 21 zugeführt. Weiterhin wird der Bewertungseinheit 20 über die Signaleingabeeinheit 21 die Dauer des Bewertungszeitintervalles sowie der Beginn des Bewertungszeitintervalles nach Beendigung des Schweißvorganges zugeführt. Diese Informationen können unmittelbar in der Bewertungseinheit 20 gespeichert werden. Die Signaleingabeeinheit 21 ist unmittelbar mit den Spannungsmeßgeräten 7,8 sowie der Speichereinheit 16 verbunden, in der die Verläufe der Thermospannung oder einer aus der Thermospannung abgeleiteten Größe gespeichert sind. Die Bewertungseinheit 20 ist mit einer Ausgabeeinheit 22 verbunden, über die eine Ausgabe des Ergebnisses der Beurteilung der Qualität erfolgt, beispielsweise in Form einer grafischen Anzeige oder in Form von Datensignalen, die einer Rechneranlage oder einem Drucker zuführbar sind. In der Bewertungseinheit 20 kann ebenfalls anhand der durchgeführten Beurteilung der Qualität eine automatische Regelung einer die Punktschweißverbindungen herstellenden Punktschweißmaschine erfolgen. Hierzu wird beispielsweise über die Ausgabeeinheit 22 ein Steuersignal zur Steuerung der Schweißstromquelle 9 abgegeben. Die Bewertungseinheit 20, die Signaleingabeeinheit 21 sowie die Ausgabeeinheit 22 können jeweils als voneinander getrennte Einheiten oder als eine einzige Einheit, beispielsweise in einer Rechneranlage, realisiert sein.

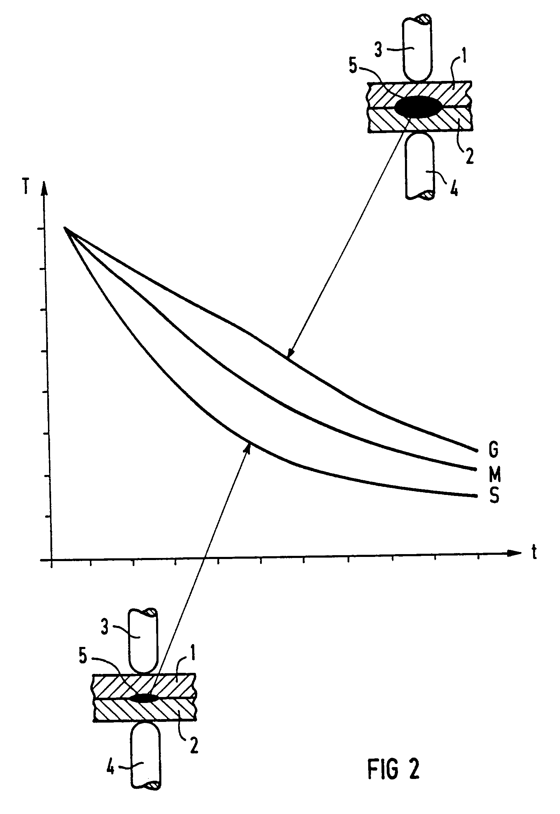

In FIG 2 sind qualitativ drei verschiedene Temperaturverläufe an einer Punktschweißverbindung dargestellt. Die Verläufe sind jeweils mit den Buchstaben G (für gut), M (für mittel) und S (für schlecht) gekennzeichnet. Der mit G gekennzeichnete Verlauf ist bereichsweise annähernd linear und weist in einem mittleren Bereich eine leichte Ausbuchtung nach oben auf, was auf eine Verzögerung des Temperaturabfalles wegen einer in diesem Temperaturbereich freiwerdenden Erstarrungswärme an der Punktschweißverbindung 5 zurückzuführen ist. Die mit M bzw. S gekennzeichneten Verläufe zeigen eine solche Ausbuchtung nicht, entsprechend ist die Punktschweißverbindung 5 in diesem Fall allenfalls gering ausgeprägt.

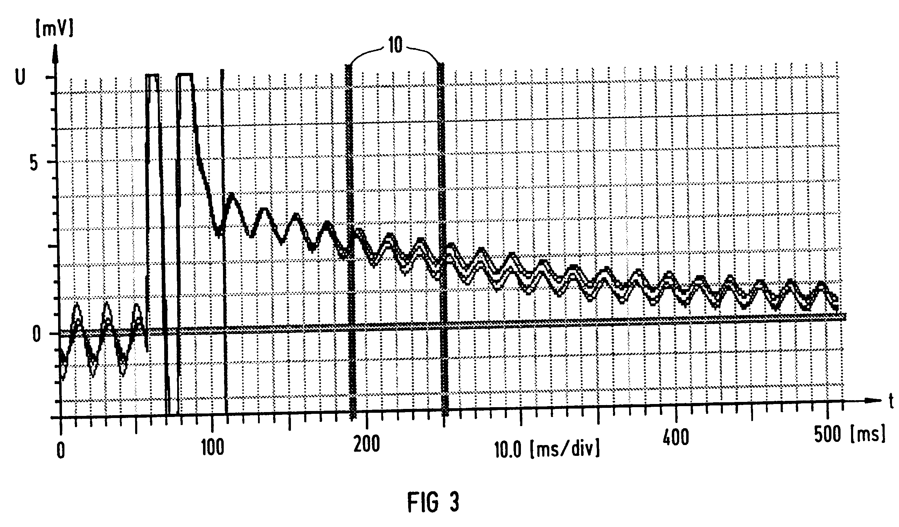

FIG 3 zeigt einen mit der in FIG 1 skizzierten Vorrichtung bestimmten Verlauf der mit einem Spannungsmeßgerät 7,8 ermittelten Spannung, die eine thermoelektrische Spannung zwischen einer Elektrode und den miteinander verschweißten Teilen 1,2 ist. Dem Spannungssignal ist hierbei ein zeitlich periodisches Signal überlagert, daß auf die Verwendung einer Wechselstromschweißanlage zurückzuführen ist. Man erkennt bei einer Zeit von etwa 80 ms einen sehr hohen Spannungsimpuls, welcher die Schweißung charakterisiert. Zu höheren Zeiten erkennt man einen Abfall der Spannung. In der FIG 3 sind die Spannungsverläufe vier verschiedener Referenzpunktschweißverbindungen mit unterschiedlicher Qualität dargestellt. Etwa 100 ms nach Ende des Schweißimpulses ist eine deutliche Unterscheidung der einzelnen Verläufe möglich. Bei größeren Zeiten tritt eine erneuerte Annäherung der Verläufe auf, so daß diese nicht mehr deutlich voneinander unterscheidbar sind. Ein Bewertungsintervall für die Qualitätsbeurteilung ist somit innerhalb der Bereiche zu wählen, in denen die Verläufe auseinandergehen und wieder zusammengehen. Das gezeigte Bewertungszeitintervall 10 beträgt 60 ms und beginnt bei einem Zeitpunkt, an dem die Verläufe erstmals deutlich verschieden voneinander sind.

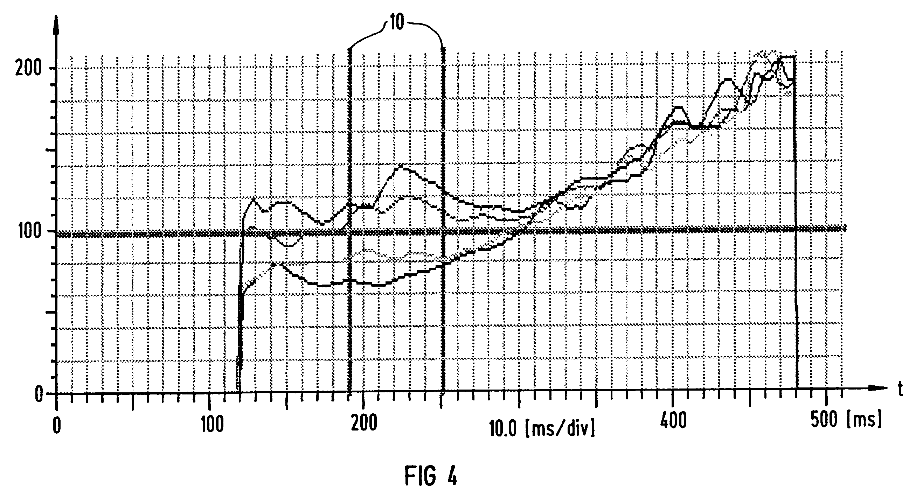

FIG 4 zeigt einen Verlauf einer Größe, die aus dem Quotienten der Thermospannung und der ersten zeitlichen Ableitung der Thermospannung gebildet ist. Das der Thermospannung überlagerte periodische Signal ist darin eliminiert. Es sind wie in FIG 3 vier verschiedene Verläufe mit unterschiedlicher Qualität der zugeordneten Referenzpunktschweißverbindungen dargestellt. In einem mittleren Bereich sind die Verläufe deutlich voneinander verschieden und in einer durch die Mittelwerte gegebenen Reihenfolge geordnet, die der Reihenfolge der Qualitäten der zugeordneten Referenzpunktschweißverbindungen entspricht; der oberste Verlauf entspricht der höchsten Qualität und der untere Verlauf der niedrigsten Qualität. Mit steigendem Mittelwert nimmt somit auch die Qualität zu. Es besteht eine monotone funktionale Beziehung zwischen Mittelwerten und Qualitäten. Als Bewertungsmaßzahl für die Qualität kann beispielsweise ein Mittelwert der Werte eines einer Referenzpunktschweißverbindung zugeordneten Verlaufes innerhalb des Bewertungszeitintervalles 10 verwendet werden. Dem obersten Verlauf und somit der zugehörigen Referenzpunktschweißverbindung ist in diesem Fall eine Bewertungsmaßzahl von 124 zugeordnet, den in der Reihenfolge nach unten folgenden Verläufen jeweils die Bewertungsmaßzahlen 112, 81 und 66. Als Bewertungsmaßzahl für eine gerade noch befriedigende Punktschweißverbindung ist der Wert 100 angesetzt. Innerhalb des Bewertungszeitintervalles 10 ist aufgrund der deutlichen Unterscheidbarkeit der einzelnen Verläufe eine Bewertung einer beliebigen Punktschweißverbindung einfach und genau möglich. Die Lage des Bewertungszeitintervalles 10 ist durch die Forderung einer deutlichen Unterscheidbarkeit der Verläufe und der Forderung, daß die Mittelwerte eine monotone Funktion der Qualitäten sind, im wesentlichen festgelegt und automatisiert bestimmbar.

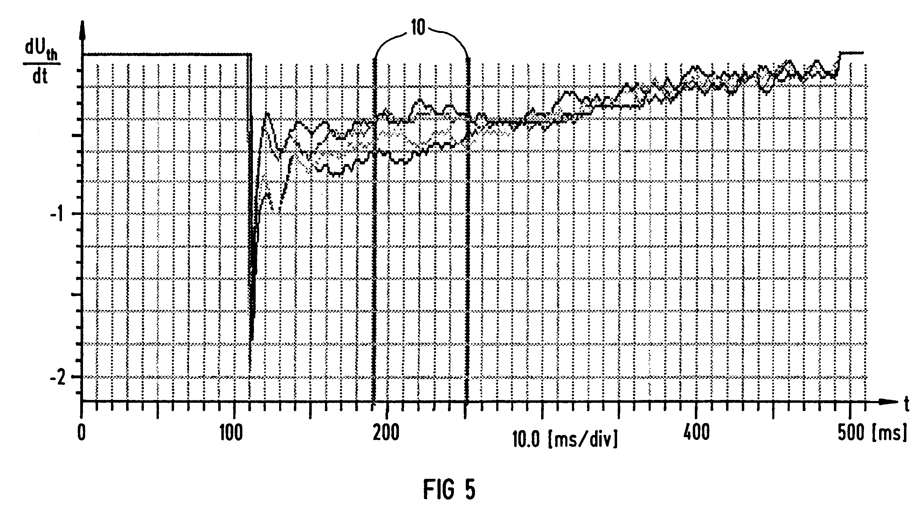

In FIG 5 sind vier verschiedene Verläufe der ersten zeitlichen Ableitung der Thermospannung für die schon in FIG 3 und 4 verwendeten Referenzpunktschweißverbindungen dargestellt. Innerhalb des Bewertungszeitintervalles 10 ist ebenfalls eine deutliche Unterscheidung der Verläufe erkennbar, und es liegt eine durch die Mittelwerte gegebene Reihenfolge der Verläufe vor, wobei die Mittelwerte eine monotone Funktion der Qualitäten der zugeordneten Referenzpunktschweißverbindungen sind. Das Ende des Bewertungszeitintervalles ist dadurch festgelegt, daß außerhalb des Bewertungszeitintervalles 10 bei größeren Zeiten eine deutliche Unterscheidung der Verläufe nicht mehr möglich ist.

Das Verfahren zur Ermittlung eines Bewertungszeitintervalles zeichnet sich dadurch aus, daß für eine Mehrzahl von Referenzpunktschweißverbindungen mit jeweils verschiedener Qualität die jeweiligen Verläufe einer Größe, welche der Temperatur zugeordnet ist, miteinander verglichen werden. Mit dem Vergleich wird ein Bewertungszeitintervall bestimmt, in dem die Verläufe der Größe deutlich voneinander verschieden sind und einen jeweiligen Mittelwert haben, wobei die Mittelwerte eine monotone Funktion der Qualitäten der zugehörigen Referenzpunktschweißverbindungen sind. Eine Verwendung der Werte der Größe innerhalb des Bewertungszeitintervalles gewährleistet somit eine einfache und genaue Zuordnung einer Qualität zu einer Punktschweißverbindung im Vergleich zu den Referenzpunktschweißverbindungen. Günstig ist es daher, wenn die Referenzpunktschweißverbindungen jeweils eine Referenzpunktschweißverbindung mit guter, befriedigender und ungenügender Qualität umfassen. Vorteilhaft ist somit ein Verfahren zur Qualitätsbeurteilung von Punktschweißverbindungen auf Grundlage eines Temperaturverlaufes innerhalb des Bewertungszeitintervalles.

## Patentansprüche

1. Verfahren zur Ermittlung eines Bewertungszeitintervalles für eine Qualitätsbeurteilung einer Punktschweißverbindung auf der Grundlage eines Temperaturverlaufes an der Punktschweißverbindung,
   **dadurch gekennzeichnet,** daß

   a) für eine Mehrzahl von Referenzpunktschweißverbindungen der jeweilige Verlauf einer der Temperatur eindeutig zugeordneten Größe bestimmt wird, wobei die Referenzpunktschweißverbindungen eine jeweils verschiedene Qualität haben und jedem Verlauf der Größe die Qualität der zugehörigen Referenzpunktschweißverbindung zugeordnet ist, und
   b) als Bewertungszeitintervall ein Zeitintervall bestimmt wird, in dem die Verläufe der Größe deutlich voneinander verschieden sind, die Größe für jeden Verlauf einen unterschiedlichen Mittelwert hat und die Mittelwerte eine monotone Funktion der jedem Verlauf zugeordneten Qualität sind.

2. Verfahren nach Anspruch 1,
   **dadurch gekennzeichnet,** daß die Referenzpunktschweißverbindungen je eine Punktschweißverbindung mit guter, befriedigender und ungenügender Qualität umfassen.

3. Verfahren nach einem der vorhergehenden Ansprüche,
   **dadurch gekennzeichnet,** daß als Beginn des Bewertungszeitintervalles ein Zeitpunkt bestimmt wird, an dem die Verläufe der Größe merklich auseinanderlaufen.

4. Verfahren nach einem der vorhergehenden Ansprüche,
   **dadurch gekennzeichnet,** daß als Ende des Bewertungszeitintervalles ein Zeitpunkt bestimmt wird, an dem die Verläufe der Größe merklich zusammenlaufen.

5. Verfahren nach einem der vorhergehenden Ansprüche,
   **dadurch gekennzeichnet,** daß das Bewertungszeitintervall maximal 100 ms, insbesondere etwa 60 ms, beträgt.

6. Verfahren nach einem der vorhergehenden Ansprüche,
**dadurch gekennzeichnet,** daß das Bewertungszeitintervall zumindest den Beginn des Erstarrens eines Schmelzbades bei einer Punktschweißverbindung mit guter Qualität umfaßt.

7. Verfahren nach einem der vorhergehenden Ansprüche,
**dadurch gekennzeichnet,** daß die Größe aus einer Thermospannung zwischen zwei miteinander verschweißten Teilen (1,2) aus zumindest einem ersten Metall und einer Elektrode (3,4) aus einem zweiten Metall gebildet wird.

8. Verfahren nach Anspruch 7,
**dadurch gekennzeichnet,** daß die Größe aus einer zeitlichen Ableitung der Thermospannung oder aus einem Quotienten aus der Thermospannung und der zeitlichen Ableitung gebildet wird.

9. Verfahren zur Qualitätsbeurteilung einer Punktschweißverbindung auf der Grundlage eines Temperaturverlaufes an der Punktschweißverbindung in einem Bewertungszeitintervall,
**dadurch gekennzeichnet,** daß das Bewertungszeitintervall so bestimmt ist, daß die zeitlichen Verläufe einer der Temperatur zugeordneten Größe einer Mehrzahl von Punktschweißverbindungen unterschiedlicher Qualität deutlich voneinander verschieden sind, die Größe für jeden Verlauf einen unterschiedlichen Mittelwert hat und die Mittelwerte eine monotone Funktion der jedem Verlauf zugeordneten Qualität sind, und eine Beurteilung der Qualität der Punktschweißverbindung auf Grundlage des in dem Bewertungszeitraum bestimmten Verlaufs der Temperatur oder einer der Temperaturen eindeutig zugeordneten Größe durchgeführt wird.

10. Verfahren nach Anspruch 9,
**dadurch gekennzeichnet,** daß quasikontinuierlich für jeden Zeitpunkt innerhalb des Bewertungszeitintervalls (10) die Größe bestimmt wird.

11. Verfahren nach einem der Ansprüche 9 oder 10,
**dadurch gekennzeichnet,** daß in dem Bewertungszeitintervall (10) ein Mittelwert der Größe bestimmt und als Bewertungsmaßzahl für die Qualität der Punktschweißverbindung verwendet wird.

12. Vorrichtung (15) zur Ermittlung eines Bewertungszeitintervalls für eine Qualitätsprüfung einer Punktschweißverbindung auf Grundlage eines Temperaturverlaufes an der Punktschweißverbindung gekennzeichnet durch

a) eine Speichereinheit (16), in der für eine Mehrzahl von Referenzpunktschweißverbindungen der zeitliche Verlauf einer der Temperatur eindeutig zuordenbaren Größe und eine jeweilige den Verläufen zugeordneten Qualität der Referenzpunktschweißverbindungen speicherbar sind, wobei die Mehrzahl von Referenzpunktschweißverbindungen jeweils eine unterschiedliche Qualität haben,
b) eine Vergleichseinheit (17), in der eine automatische Ermittlung des Bewertungszeitintervalls durch Vergleich der in der Speichereinheit (16) speicherbaren Verläufe als ein Zeitintervall erfolgt, in dem die Verläufe deutlich voneinander verschieden sind sowie jeweils einen unterschiedlichen Mittelwert aufweisen und zwischen den Mittelwerten und den Qualitäten eine monoton funktionale Beziehung besteht,
c) eine Ausgabeeinheit (18), mit der eine Ausgabe des ermittelten Bewertungszeitintervalles (10) erfolgt.

13. Vorrichtung (19) zur Beurteilung der Qualität einer Punktschweißverbindung gekennzeichnet durch

a) eine Bewertungseinheit (20), in der die Beurteilung der Qualität auf Grundlage des Verlaufs der Temperatur oder einer der Temperatur zugeordneten Größe in einem Bewertungszeitintervall erfolgt, welches bestimmt ist als ein Zeitintervall, in dem die Verläufe einer Mehrzahl von Referenzpunktschweißverbindungen deutlich voneinander verschieden sind sowie jeweils einen unterschiedlichen Mittelwert aufweisen und zwischen den Mittelwerten und den Qualitäten der Referenzpunktschweißverbindung eine monotone funktionale Beziehung besteht,
b) zumindest eine Signaleingabeeinheit (21) über die der Bewertungseinheit (20) der Verlauf der Temperatur oder einer der Temperatur zugeordneten Größe zuführbar ist, sowie
c) eine Ausgabeeinheit (22), über die eine Ausgabe des Ergebnisses der Beurteilung der Qualität erfolgt.

**Claims**

1. Method for determining an evaluation time interval for a quality assessment of a spot weld on the basis of a temperature course at the spot weld, characterized in that

a) there is determined for a plurality of reference spot welds the respective course of a variable which is clearly associated with the temperature, with the reference spot welds having a different quality in each case and the quality of the associated reference spot weld being associated with each course of the variable, and

b) there is determined as an evaluation time interval a time interval in which the courses of the variable are clearly different from each other, the variable has a different mean value for each course and the mean values are a monotonic function of the quality associated with the respective course.

2. Method according to claim 1, characterised in that the reference spot welds include a good quality spot weld, one having satisfactory quality and one having unsatisfactory quality.

3. Method according to one of the preceding claims, characterised in that there is determined as the start of the evaluation time interval an instant at which the courses of the variable noticeably diverge.

4. Method according to one of the preceding claims, characterised in that there is determined as the end of the evaluation time interval an instant at which the courses of the variable noticeably converge.

5. Method according to one of the preceding claims, characterised in that the evaluation time interval amounts to a maximum of 100 ms, in particular approximately 60 ms.

6. Method according to one of the preceding claims, characterised in that the evaluation time interval includes at least the start of the solidification of a molten bath in the case of a good quality spot weld.

7. Method according to one of the preceding claims, characterised in that the variable is formed from a thermoelectric voltage between two parts (1, 2), which are welded to each other and consist of at least a first metal, and an electrode (3, 4), which consists of a second metal.

8. Method according to claim 7, characterised in that the variable is formed from a derivation with respect to time of the thermoelectric voltage, or from a quotient of the thermoelectric voltage and the derivation with respect to time.

9. Method for assessing the quality of a spot weld on the basis of a temperature course at the spot weld in an evaluation time interval, characterised in that the evaluation time interval is determined in such a way that the courses over time of a variable of a plurality of spot welds of different quality, which variable is associated with the temperature, are clearly different from each other, the variable has a different mean value for each course, and the mean values are a monotonic function of the quality associated with each course, and an assessment of the quality of the spot weld is carried out on the basis of the course of the temperature that is determined in the evaluation time space or of a variable which is clearly associated with the temperature.

10. Method according to claim 9, characterised in that the variable is determined quasi-continuously for each instant within the evaluation time interval (10).

11. Method according to one of the claims 9 or 10, characterised in that in the evaluation time interval (10), a mean value of the variable is determined and used as an evaluation dimension for the quality of the spot weld.

12. Device (15) for determining an evaluation time interval for a quality check on a spot weld on the basis of a temperature course at the spot weld, characterised by

a) a memory unit (16), in which for a plurality of reference spot welds, the course over time of a variable which can be clearly associated with the temperature and a respective quality of the spot welds that is associated with the courses can be stored, with the plurality of reference spot welds each having a different quality,
b) a comparison unit (17), in which by comparing the courses which can be stored in the memory unit (16), there takes place an automatic determining of the evaluation time interval as a time interval in which the courses are clearly different from each other and also have in each case a different mean value and there is a monotonically functional relationship between the mean values and the qualities,
c) an output unit (18), with which an output of the evaluation time interval (10) which has been determined takes place.

13. Device (19) for assessing the quality of a spot weld, characterised by

a) an evaluation unit (20), in which there takes place the assessment of the quality on the basis of the course of the temperature, or of a variable associated with the temperature, in an evaluation time interval, which is determined as a time interval in which the courses of a plurality of reference spot welds are clearly different from each other and have in each case a different mean value and there is a monotonically functional relationship between the mean values and the qualities of the reference spot weld,

b) at least one signal input unit (21), by way of which there can be supplied to the evaluation unit (20) the course of the temperature, or of a variable associated with the temperature, and

c) an output unit (22), by way of which an output of the result of the quality assessment takes place.

**Revendications**

1. Procédé permettant de déterminer un intervalle de temps d'évaluation pour évaluer la qualité d'une soudure par points sur la base d'une courbe de variation de température au niveau de la soudure par points,
caractérisé en ce que

   a) la courbe de variation respective d'une grandeur clairement associée à la température est déterminée pour un grand nombre de soudures par points de référence, les soudures par points de référence étant, à chaque fois, de qualité différente et la qualité de la soudure par points de référence correspondante étant associée à chaque courbe de variation de la grandeur, et
   b) on détermine, en tant qu'intervalle de temps d'évaluation, un intervalle de temps pendant lequel les courbes de variation de la grandeur diffèrent nettement les unes des autres, pendant lequel la grandeur a une valeur moyenne différente pour chaque courbe de variation et pendant lequel les valeurs moyennes sont une fonction monotone de la qualité associée à chaque courbe.

2. Procédé selon la revendication 1, caractérisé en ce que les soudures par points de référence comprennent, à chaque fois, une soudure par points de bonne qualité, une soudure par points de qualité satisfaisante et une soudure par points de qualité insuffisante.

3. Procédé selon l'une quelconque des revendications précédentes, caractérisé en ce que l'on détermine, en tant que début de l'intervalle de temps d'évaluation, un instant où les courbes de variation de la grandeur s'écartent sensiblement.

4. Procédé selon l'une quelconque des revendications précédentes, caractérisé en ce que l'on détermine, en tant que fin de l'intervalle de temps d'évaluation, un instant où les courbes de variation de la grandeur se rejoignent sensiblement.

5. Procédé selon l'une quelconque des revendications précédentes, caractérisé en ce que l'intervalle de temps d'évaluation dure au maximum 100 ms, notamment environ 60 ms.

6. Procédé selon l'une quelconque des revendications précédentes, caractérisé en ce que l'intervalle de temps d'évaluation englobe au moins le début de la solidification d'un bain de fusion lors d'une soudure par points de bonne qualité.

7. Procédé selon l'une quelconque des revendications précédentes, caractérisé en ce que la grandeur est formée à partir d'une tension thermoélectrique entre deux pièces (1, 2) formées d'au moins un premier métal soudées l'une à l'autre et une électrode (3, 4) formée d'un second métal.

8. Procédé selon la revendication 7, caractérisé en ce que la grandeur est formée à partir d'une dérivée dans le temps de la tension thermoélectrique ou à partir d'un quotient de la tension thermoélectrique et de la dérivée dans le temps.

9. Procédé permettant d'évaluer la qualité d'une soudure par points sur la base d'une courbe de variation de température au niveau de la soudure par points pendant un intervalle de temps d'évaluation, caractérisé en ce que l'intervalle de temps d'évaluation est déterminé de manière à ce que les courbes de variation dans le temps d'une grandeur associée à la température d'un grand nombre de soudures par points de qualité différente diffèrent nettement les unes des autres, que la grandeur ait une valeur moyenne différente pour chaque courbe de variation et les valeurs moyennes soient une fonction monotone de la qualité associée à chaque courbe de variation, et en ce qu'une évaluation de la qualité de la soudure par points est réalisée sur la base de la courbe de variation de température déterminée dans l'intervalle de temps d'évaluation ou d'une grandeur clairement associée aux températures.

10. Procédé selon la revendication 9, caractérisé en ce que la grandeur est déterminée de manière quasi continue pour chaque instant à l'intérieur de l'intervalle de temps d'évaluation (10).

11. Procédé selon l'une quelconque des revendications 9 ou 10, caractérisé en ce qu'une valeur moyenne de la grandeur est déterminée dans l'intervalle de temps d'évaluation (10) et utilisée en tant qu'indice d'évaluation pour la qualité de la soudure par points.

12. Dispositif (15) pour déterminer un intervalle de temps d'évaluation pour un contrôle de la qualité d'une soudure par points sur la base d'une courbe de variation de température au niveau de la soudure par points, caractérisé par

a) une unité d'enregistrement (16) dans laquelle on peut enregistrer, pour un grand nombre de soudures par points de référence, la courbe de variation dans le temps d'une grandeur pouvant être clairement associée à la température et d'une qualité des soudures par points de référence associée respectivement à ces courbes de variation, les multiples soudures par points de référence étant à chaque fois de qualité différente,

b) une unité de comparaison (17) dans laquelle une détermination automatique de l'intervalle de temps d'évaluation s'effectue par comparaison des courbes de variation pouvant être enregistrées dans l'unité d'enregistrement (16), sous la forme d'un intervalle de temps pendant lequel les courbes de variation diffèrent nettement les unes des autres, présentent chacune une valeur moyenne différente et pour lequel une fonction monotone existe entre les valeurs moyennes et les qualités,

c) une unité de sortie (18) grâce à laquelle s'effectue une sortie de l'intervalle de temps d'évaluation (10) déterminé.

13. Dispositif (19) pour évaluer la qualité d'une soudure par points, caractérisé par

a) une unité d'évaluation (20) dans laquelle l'évaluation de la qualité s'effectue sur la base de la courbe de variation de la température ou d'une grandeur associée à la température pendant un intervalle de temps d'évaluation qui est déterminé en tant qu'intervalle de temps pendant lequel les courbes de variation d'un grand nombre de soudures par points de référence diffèrent nettement les unes des autres, présentent chacune une valeur moyenne différente, et pour lequel une fonction monotone existe entre les valeurs moyennes et les qualités de la soudure par points de référence,

b) au moins une unité d'entrée d'un signal (21) par le biais de laquelle la courbe de variation de la température ou d'une grandeur associée à la température peut être amenée à l'unité d'évaluation (20), ainsi que

c) une unité de sortie (22) par le biais de laquelle s'effectue une sortie du résultat de l'évaluation de la qualité.

**FIG 1**

FIG 2

FIG 3

FIG 4

EP 0 715 555 B1

FIG 5